(19)

Europäisches
Patentamt
European
Patent Office
Office européen
des brevets

(11) **EP 4 755 851 A1**

(12) **EUROPEAN PATENT APPLICATION**

(43) Date of publication:
**10.06.2026 Bulletin 2026/24**

(21) Application number: **25160625.7**

(22) Date of filing: **27.02.2025**

(51) International Patent Classification (IPC):
**C01B 32/33** (2017.01)    **C01B 32/342** (2017.01)
**H01G 11/34** (2013.01)

(52) Cooperative Patent Classification (CPC):
**C01B 32/342; C01B 32/33; H01G 11/34;
H01G 11/44;** C01P 2004/60; C01P 2006/14;
Y02E 60/13

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2024 TW 113147477**

(71) Applicant: **CPC Corporation, Taiwan
Kaohsiung City 811251 (TW)**

(72) Inventors:
• **CHEN, Yan-Shi
60051 CHIAYI CITY (TW)**
• **KAO, Yu-Ting
60051 CHIAYI CITY (TW)**

(74) Representative: **Regimbeau
20, rue de Chazelles
75847 Paris Cedex 17 (FR)**

Remarks:
Amended claims in accordance with Rule 137(2) EPC.

(54) **METHOD FOR MAKING ACTIVATED CARBON MATERIAL FOR SUPERCAPACITOR**

(57)    A method for making an activated carbon material includes the steps of: A) heating a heavy hydrocarbon oil such that the heavy hydrocarbon oil undergoes a coking reaction to form a soft carbon precursor; B) grinding and sizing the soft carbon precursor to obtain a refined soft carbon precursor; C) mixing the refined soft carbon precursor and a solid activator to obtain a mixture; D) heating the mixture such that the mixture undergoes an activation reaction and a carbonization reaction to obtain a first carbonaceous component containing an activated carbon and a residual of the solid activator; E) treating the first carbonaceous component to obtain a second carbonaceous component; F) grinding and sizing the second carbonaceous component to obtain a third carbonaceous component; and G) heating the third carbonaceous component to obtain the activated carbon material.

FIG. 3

EP 4 755 851 A1

**Description**

The present disclosure relates to a method for making a carbon material, and more particularly to a method for making an activated carbon material for a supercapacitor.

Supercapacitors are also known as ultracapacitors, and include electrostatic double-layer capacitors, among others. In the industry, supercapacitors are known as electrochemical capacitors having a high energy density, and capacity and performance of supercapacitors are between those of electrolytic capacitors and rechargeable batteries. Supercapacitors have become the main tool in power supply system due to fast charging/discharging and long cycle life thereof. At present, carbon materials are the most common electrode material used in supercapacitors. It should be noted that, since carbon materials serving as an electrode material may be produced by subjecting heavy hydrocarbon oil sold at low price from oil refineries to multiple processes, the economic benefits of such heavy hydrocarbon oil can be further improved.

TW I822169 B discloses a method for manufacturing a carbon material for a supercapacitor, which includes steps (a) to (c) conducted in sequence.

In step (a), a carbon raw material is subjected to a heat treatment at a temperature ranging from 150°C to 650°C for a time period ranging from 10 hours to 20 hours so as to obtain a heat-treated carbon raw material. The carbon raw material includes a coal-tar pitch, a petroleum coke pitch, a mesophase carbon microsphere, and combinations thereof. In addition, the carbon raw material has an average particle size ranging from 5 $\mu$m to 50 $\mu$m.

In step (b), the heat-treated carbon raw material is evenly mixed with a strong base, such as potassium hydroxide (KOH), so as to form a mixture, followed by subjecting the mixture to a reaction at a temperature ranging from 820°C to 1020°C for a time period ranging from 5 hours to 10 hours, thereby obtaining an alkali-activated carbon raw material. A weight ratio of the strong base to the heat-treated carbon raw material is greater than or equal to 1.5 and less than 3.0 in decimal form.

In step (c), the alkali-activated carbon raw material is repeatedly washed with a cleaning agent such as sulfuric acid ($H_2SO_4$) so as to remove the strong base remaining in the alkali-activated carbon raw material, followed by drying (in some cases, pulverizing after the drying), thereby obtaining the carbon material for the supercapacitor. The carbon material for the supercapacitor thus obtained has a specific surface area (SSA), which is determined by Brunauer-Emmett-Teller (BET) method (hereinafter abbreviated as "BET SSA"), ranging from 1400 $m^2$/g to 2650 $m^2$/g, and a surface area occupied by pores in the carbon material which has a diameter of less than 0.7 nm accounts for 30% to 52% of a total surface area of the carbon material, which is conducive to increasing the specific capacitance (F/cc) of such supercapacitor.

In view of the above, improvement in the method for manufacturing the carbon material to enhance the BET SSA thereof so as to increase the specific capacitance of supercapacitors made from such carbon material is an aim to be achieved by those skilled in the art.

Therefore, an object of the disclosure is to provide a method for making an activated carbon material for a supercapacitor, which can alleviate at least one of the drawbacks of the prior art.

According to an aspect of the disclosure, there is provided the method for making the activated carbon material for the supercapacitor according to claim 1.

Other features and advantages of the disclosure will become apparent in the following detailed description of the embodiment(s) with reference to the accompanying drawings. It is noted that various features may not be drawn to scale.

FIG. 1 is a polarizing microscope image showing a soft carbon precursor obtained in step A) of a method of Example 1 (E1).

FIG. 2 is a graph illustrating relationship between specific surface area (SSA) of activated carbon material, which is determined by Brunauer-Emmett-Teller (BET) method (noted as "$S_{BET}$"), and average particle size of refined soft carbon precursor in E1, Example 2 (E2), and Example 3 (E3).

FIG. 3 a graph illustrating relationship between SSA of activated carbon material, which is determined by the BET method (noted as "$S_{BET}$"), and average particle size of refined soft carbon precursor in Example 4 (E4), Example 5 (E5), and Example 6 (E6).

FIG. 4 is a graph illustrating relationship between specific capacitance and current density for supercapacitors of Example 3c (E3c) (assembled using an activated carbon material obtained by the method of E3c), and Example 6c (E6c) (assembled using an activated carbon material obtained by the method of E6c).

FIG. 5 is a graph illustrating relationship between energy density and power density for the supercapacitors of E3c and E6c.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a method for making an activated carbon material for a supercapacitor, which includes the following steps A) to G).

In step A), a heavy hydrocarbon oil is heated at a pressure ranging from 2 atm to 3 atm and a temperature ranging from 460°C to 500°C for at least 4 hours such that the heavy hydrocarbon oil undergoes a coking reaction to form a soft carbon precursor. The soft carbon precursor has a quinoline-insoluble (QI) content ranging from 95 wt% to 98 wt% and a toluene-insoluble (TI) content ranging from 89 wt% to 91 wt%, and contains a mesophase structure of greater than 50 vol% based on 100 vol% of the soft carbon precursor. To be specific, the heavy hydrocarbon oil is transported to a reaction tank (not shown) and then subjected to a heat treatment at the aforesaid temperature and pressure for not less than 4 hours, which causes the heavy hydrocarbon oil to undergo pyrolysis and condensation polymerization in the reaction tank, thereby forming the soft carbon precursor.

In step B), the soft carbon precursor is ground and sized so as to obtain a refined soft carbon precursor. The refined soft carbon precursor has an average particle size ranging from 0.3 mm to 5.0 mm.

In step C), the refined soft carbon precursor is mixed with a solid activator without a solvent being present so as to obtain a mixture. A weight ratio of the refined soft carbon precursor to the solid activator ranges from 0.25 to 0.5 in decimal form. That is to say, the weight ratio of the refined soft carbon precursor to the solid activator ranges from 1:4 to 1:2. In order to optimize matching degree of particle size between the refined soft carbon precursor and the solid activator, in step C) of some embodiments, the average particle size of the refined soft carbon precursor may range from 1 mm to 5 mm, and the solid activator may have an average particle size ranging from 8 mm to 10 mm. In certain embodiments, the solid activator may not be subjected to a grinding and refining treatment. According to the present disclosure, the solid activator in step C) is an alkaline agent. An example of the alkaline agent may be, but is not limited to, potassium hydroxide (KOH).

In step D), the mixture is heated such that the mixture undergoes an activation reaction and a carbonization reaction to obtain a first carbonaceous component containing an activated carbon and a residual of the solid activator. In step D) of some embodiments, the mixture may be heated to a temperature ranging from 700°C to 900°C at a heating rate ranging from 1°C/min to 10°C/min under a nitrogen atmosphere. In step D) of still some embodiments, the mixture may be heated to a first temperature ranging from 400°C to 500°C at a heating rate ranging from 1°C/min to 10°C/min under the nitrogen atmosphere and kept at the first temperature for a time period ranging from 4 hours to 6 hours, and then heated to a second temperature ranging from 700°C to 900°C at the same heating rate under the nitrogen atmosphere and kept at the second temperature for at least 1 hour.

In step E), the first carbonaceous component is treated such that the residual of the solid activator is removed from the first carbonaceous component to obtain a second carbonaceous component. In some embodiments, step E) may include steps E1) to E4). Specifically, in step E1), a first clear water is introduced into the first carbonaceous component so as to obtain an alkaline aqueous solution containing the activated carbon and the residual of the solid activator that is dissolved in the first clear water. In an embodiment, step E1) may be conducted for at least 1 hour. In step E2), a first acidic aqueous solution containing an acid agent is introduced into the alkaline aqueous solution to allow acid-base neutralization between the residual of the solid activator contained in the alkaline aqueous solution and the acid agent contained in the first acidic aqueous solution, so as to form a salt, thereby obtaining a second acidic aqueous solution with the salt being dissolved therein. In addition, the second acidic aqueous solution has a pH value greater than a pH value of the first acidic aqueous solution. In another embodiment, step E2) may be conducted for at least 1 hour, and the acid agent in the first acidic aqueous solution may have a concentration ranging from 0.8 M to 2.0 M. The acid agent suitable for use in the first acidic aqueous solution of the present disclosure may include sulfuric acid ($H_2SO_4$), nitric acid ($HNO_3$), hydrochloric acid (HCl), or combinations thereof. In step E3), a second clear water is introduced into the second acidic aqueous solution so as to obtain a final solution having a pH value of 7. In step E4), a liquid portion of the final solution is removed so as to obtain the second carbonaceous component. Specifically, in still another embodiment, in step E4), initially, the final solution may be left to stand overnight so as to allow a component therein to be precipitated, and then the liquid portion that is located above the component that has been precipitated is removed, followed by heating the component at a temperature ranging from 100°C to 150°C for at least 4 hours, thereby obtaining a second carbonaceous component.

It should be noted that, since the refined soft carbon precursor and the solid activator (i.e., the alkaline agent) are directly mixed, the mixture thus obtained may have a very high pH value. Therefore, the purpose of implementing step E1) followed by step E2) is described as follows. First, in step E1), the pH value of the mixture can be lowered by introduction of the first clear water thereinto, and the alkaline aqueous solution thus obtained has a pH value far lower than that of the mixture, allowing the degree of exotherm, which is caused by the acid-base neutralization in step E2) to be greatly reduced, thereby reducing the risk of implementing step E). It should be noted that, the acid-base neutralization occurs between the residual of the solid activator contained in the alkaline aqueous solution and the acid agent (which is a strong acid) contained in the first acidic aqueous solution.

In step F), the second carbonaceous component is ground and sized so as to obtain a third carbonaceous component. To be specific, step F) of the method according to the present disclosure involves grinding and sizing the second carbonaceous component so that the third carbonaceous component thus obtained has a D50 particle size ranging from 8 $\mu$m to 12 $\mu$m, a D10 particle size ranging from 2 $\mu$m to 6 $\mu$m, and a D90 particle size ranging from 14 $\mu$m to 20 $\mu$m. In an embodiment, in step F), a cyclone classifier may be used for screening (i.e., sizing) after grinding of the second carbonaceous component, so that that third carbonaceous component thus obtained has a D50 particle size ranging from 8 $\mu$m to 10 $\mu$m, a D10 particle size ranging from 2 $\mu$m to 4 $\mu$m, and a D90 particle size ranging from 14 $\mu$m to 16 $\mu$m.

In step G), the third carbonaceous component is heated so as to obtain the activated carbon material for the supercapacitor. In certain embodiments, the third carbonaceous component may be heated to a temperature of less than 1000°C at a heating rate ranging from 1°C/min to 10°C/min under nitrogen atmosphere. The activated carbon material for the supercapacitor may have a plurality of micropores and a plurality of mesopores, and a diameter of each of the mesopores is greater than a diameter of each of the micropores. In addition, a ratio of a total volume of the micropores to a total volume of the mesopores may range from 1.5 to 5.0 in decimal form.

The effect of the invention lies in that the activated carbon material obtained by the method according to the present disclosure have high specific surface area as determined by Brunauer-Emmett-Teller method, so that a supercapacitor assembled using carbon electrode sheets prepared from the activated carbon material exhibits high energy density, high power density and excellent specific capacitance.

The present disclosure will be described by way of the following examples. However, it should be understood that the following examples are intended solely for the purpose of illustration and should not be construed as limiting the present disclosure in practice.

The present disclosure provides the following examples and comparative examples based on the embodiment of the method for making the activated carbon material so as to describe in detail the specific procedures of the method, the activated carbon material obtained by the method, the carbon electrode prepared from the activated carbon material, the supercapacitor assembled from the carbon electrode, and the electrical properties of the supercapacitor.

**Method for making activated carbon material for supercapacitor**

<Starting materials for making activated carbon material>

Heavy hydrocarbon oil was obtained from CPC Corporation, Taiwan.
Solid potassium hydroxide (KOH) was purchased from Supelco, and product number thereof was EMSURE.
Sulfuric acid ($H_2SO_4$) was purchased from Fluka, and product number thereof was Honeywell.
Nitric acid ($HNO_3$) was purchased from Fluka, and product number thereof was Honeywell.

<EXAMPLES>

Example 1 (E1): Examples 1a to 1d (E1a to E1d)

The procedures for making an activated carbon material for a supercapacitor in the method according to the present disclosure in E1 were described below.

First (i.e., step A)), a heavy hydrocarbon oil was heated at a pressure ranging from 2 atm to 3 atm and a temperature of 480°C for more than 4 hours such that the heavy hydrocarbon oil underwent a coking reaction to form a soft carbon precursor. Next (i.e., step B)), the soft carbon precursor was ground and sized so as to obtain a refined soft carbon precursor, which was then further classified into four groups to serve as Example 1a (E1a), Example 1b (E1b), Example 1c (E1c), and Example 1d (E1d), respectively. Specifically, the refined soft carbon precursor of E1a had an average particle size of less than 0.3 mm, the refined soft carbon precursor of E1b had an average particle size of 1 mm, the refined soft carbon precursor of E1c had an average particle size ranging from 2 mm to 3 mm, and the refined soft carbon precursor of E1d had an average particle size ranging from 3 mm to 5 mm. After that (i.e., step C)), the refined soft carbon precursor of each of E1a, E1b, E1c, and E1d was mixed with the solid KOH (serving as a solid activator) at a weight ratio of 1:2, so as to obtain a mixture. Subsequently (i.e., step D)), the mixture was heated (i.e., subjected to only one heating stage (referred to as "first thermal treatment" hereinafter) in step D) of E1) to a temperature of 800°C at a heating rate of 3°C/min, and kept at 800°C for 1 hour (i.e., temperature holding time), such that the mixture underwent an activation reaction and a carbonization reaction to obtain a first carbonaceous component containing an activated carbon and KOH (i.e., a residual of the solid KOH). Thereafter (i.e., step E)), the first carbonaceous component was subjected to a treatment conducted as follows. Initially, a first clear water was continuously introduced into the first carbonaceous component for at least 1 hour so as to obtain an alkaline aqueous solution containing the activated carbon and the KOH that was dissolved in the first clear water. Then, a first acidic aqueous solution containing the $H_2SO_4$ having a concentration of 1 M and the $HNO_3$ having a

concentration of 1 M (the $H_2SO_4$ and the $HNO_3$ together served as an acid agent) was continuously introduced into the alkaline aqueous solution for at least 1 hour to allow acid-base neutralization between the KOH contained in the alkaline aqueous solution and the acid agent contained in the first acidic aqueous solution, so as to form potassium nitrate ($KNO_3$) and potassium sulfate ($K_2SO_4$) (the $KNO_3$ and the $K_2SO_4$ together served as a salt), thereby obtaining a second acidic aqueous solution including the aforesaid salt being dissolved therein. In addition, the second acidic aqueous solution had a pH value greater than a pH value of the first acidic aqueous solution. After that, a second clear water was continuously introduced into the second acidic aqueous solution so as to obtain a final solution having a pH value of 7, followed by leaving the final solution to stand overnight so as to allow a component therein to be precipitated. Next, a liquid portion of the final solution that was located above the component that had been precipitated was removed so as to obtain the component. The component was then heated at a temperature ranging from 100°C to 150°C for at least 4 hours so as to obtain a second carbonaceous component. Subsequently (i.e., step F)), the second carbonaceous component was ground and sized so as to obtain a third carbonaceous component. Afterwards ((i.e., step G))), the third carbonaceous component was heated to a temperature of 700°C at a heating rate of 10°C/min for 30 minutes, thereby obtaining the activated carbon material for the supercapacitor of each of E1a, E1b, E1c, and 1Ed.

Comparative Example 1 (CE1)

The procedures in the method for making the activated carbon material for the supercapacitor of CE1 were substantially similar to those of each of the examples of E1, except that, the refined soft carbon precursor of CE1, which was obtained after grinding and sizing the soft carbon precursor, had a D50 particle size of 5.11 $\mu$m, a D10 particle size of 2.04 $\mu$m, and a D90 particle size of 9.59 $\mu$m.

Comparative Example 2 (CE2)

The procedures in the method for making the activated carbon material for the supercapacitor of CE2 were substantially similar to those of CE1, except that, the solid activator of CE2 was a KOH powder that was obtained after grinding the solid KOH, and had an average particle size of approximately 5 $\mu$m. Examples 2 to 6 (E2 to E6): Examples 2a to 2d (E2a to E2d), Examples 3a to 3d (E3a to E3d), Examples 4a to 4d (E4a to E4d), Examples 5a to 5d (E5a to E5d), and Examples 6a to 6d (E6a to E6d)

The procedures in the method for making the activated carbon material of each of E2a, E2b, E2c, E2d, E3a, E3b, E3c, E3d, E4a, E4b, E4c, E4d, E5a, E5b, E5c, E5d, E6a, E6b, E6c, and E6d were substantially similar to those of each of the examples of E1, and differences in process parameters of these examples were summarized in Table 1 below.

Table 1

| Examples | Step B) | | Step D)[1] | | | |
|---|---|---|---|---|---|---|
| | Refined soft carbon precursor | Weight ratio of refined soft carbon precursor to solid KOH | First thermal treatment | | Second thermal treatment | |
| | Average particle size (mm) | | Temperature (°C) | Temperature holding time (hour(s)) | Temperature (°C) | Temperature holding time (hour(s)) |
| E1a | <0.3 | 1:2 | 800 | 1 | | |

(continued)

| Examples | Step B) | | Step D)[1] | | | |
|---|---|---|---|---|---|---|
| | Refined soft carbon precursor | Weight ratio of refined soft carbon precursor to solid KOH | First thermal treatment | | Second thermal treatment | |
| | Average particle size (mm) | | Temperature (°C) | Temperature holding time (hour(s)) | Temperature (°C) | Temperature holding time (hour(s)) |
| E1b | 1 | 1:2 | 800 | 1 | | |
| E1c | 2-3 | 1:2 | 800 | 1 | | |
| E1d | 3-5 | 1:2 | 800 | 1 | | |
| E2a | <0.3 | 1:3 | 800 | 1 | | |
| E2b | 1 | 1:3 | 800 | 1 | | |
| E2c | 2-3 | 1:3 | 800 | 1 | | |
| E2d | 3-5 | 1:3 | 800 | 1 | | |
| E3a | <0.3 | 1:4 | 800 | 1 | | |
| E3b | 1 | 1:4 | 800 | 1 | | |
| E3c | 2-3 | 1:4 | 800 | 1 | | |
| E3d | 3-5 | 1:4 | 800 | 1 | | |
| E4a | <0.3 | 1:2 | 450 | 5 | 800 | 1 |
| E4b | 1 | 1:2 | 450 | 5 | 800 | 1 |
| E4c | 2-3 | 1:2 | 450 | 5 | 800 | 1 |
| E4d | 3-5 | 1:2 | 450 | 5 | 800 | 1 |
| E5a | <0.3 | 1:3 | 450 | 5 | 800 | 1 |
| E5b | 1 | 1:3 | 450 | 5 | 800 | 1 |
| E5c | 2-3 | 1:3 | 450 | 5 | 800 | 1 |
| E5d | 3-5 | 1:3 | 450 | 5 | 800 | 1 |
| E6a | <0.3 | 1:4 | 450 | 5 | 800 | 1 |
| E6b | 1 | 1:4 | 450 | 5 | 800 | 1 |
| E6c | 2-3 | 1:4 | 450 | 5 | 800 | 1 |
| E6d | 3-5 | 1:4 | 450 | 5 | 800 | 1 |
| "1": Heating rate was 3°C/min | | | | | | |

**Property evaluation of soft carbon precursor and activated carbon material**

1. Measurement of quinoline-insoluble (QI) content

The soft carbon precursor obtained in E1 was subjected to measurement of QI content in accordance with the procedures set forth in American Society for Testing and Materials (ASTM) D7280-06 (2011). The result was shown in Table 2 below.

2. Measurement of toluene-insoluble (TI) content

The soft carbon precursor obtained in E1 was subjected to measurement of TI content in accordance with the procedures set forth in ASTM D4312-95a (2010). The result was shown in Table 2 below.

3. Determination of amount (vol%) of mesophase structure

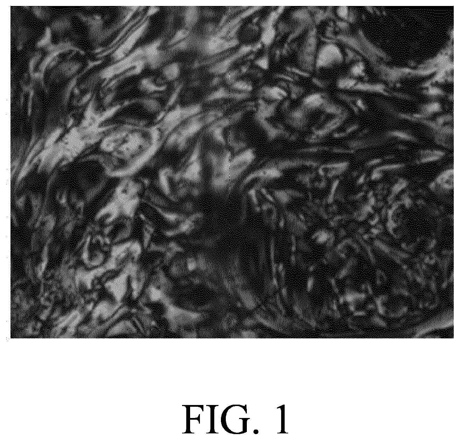

The soft carbon precursor obtained in E1 was subjected to microscopic analysis using a polarizing microscope (Manufacturer: Nikon; Model no.: Eclipse LV100POL) so as to obtain a polarizing microscope image (as shown in FIG. 1), and then the polarizing microscope image was analyzed to determine the amount of mesophase structure in the soft carbon precursor in accordance with the procedures set forth in ASTM D4616-95 (2013).

4. Measurement of specific surface area (SSA) by Brunauer-Emmett-Teller (BET) method (hereinafter abbreviated as "BET SSA")

Each of the activated carbon materials of E1a to E1d, E2a to E2d, E3a to E3d, E4a to E4d, E5a to E5d, E6a to E6d, CE1, and CE2 was subjected to measurement of BET SSA using a high-performance adsorption analyzer (Manufacturer: Micromeritics Instrument Corp., USA; Model no.: ASAP™ 2020M) in which adsorption and desorption analyses were conducted using nitrogen gas, so as to determine the relationship between adsorption capacity (V, unit: cm$^3$/g) and relative pressure ($P/P_0$) of the nitrogen gas at equilibrium pressure. During the measurement, the following BET adsorption isotherm equation (i.e., Equation (I)) was utilized:

$$\frac{P}{P_0 - P}\frac{1}{V} = \frac{1}{CV_m} + \frac{C-1}{CV_m}\frac{P}{P_0}$$ (I)

in which

$P$ = equilibrium pressure
$P_0$ = saturated vapor pressure
$C$ = BET constant
$V$ = adsorption capacity of the gas at equilibrium pressure
$V_m$ = saturated adsorption capacity of the gas to form a monolayer

Then, a plot illustrating relationship between each of the adsorption capacity and the relative pressure thereof was created by plotting $P/V(P_0-P)$ against $P/P_0$ that ranged from 0 to 1 so as to obtain the slope ($C-1/CV_m$) and the intercept ($1/CV_m$) of the plot. Thereafter, BET SSA (abbreviated as "S$_{BET}$" hereinafter) was calculated using the following Equation (II):

$$S_{BET} = N_m \sigma = \frac{V_m N \sigma}{v}$$ (II)

in which

$N_m$ = number of gas molecules adsorbed
$N$ = Avogadro constant
$\sigma$ = adsorption cross-sectional area of adsorbed gas molecules
$v$ = adsorption capacity of the gas at equilibrium pressure

5. Determination of S$_{BET}$ of mesopores and S$_{BET}$ of micropores of activated carbon material

The plot illustrating relationship between each of the adsorption capacity and the relative pressure thereof as described in Item 4 above was applied to the heterogeneous surface-2-dimension non-localized density functional theory (abbreviated as "HS-2D-NLDFT" hereinafter) analytical model so as to determine S$_{BET}$ of mesopores and S$_{BET}$ of micropores of the activated carbon material of each example.

6. Measurement of total pore volume (unit: cm$^3$/g)

Each of the activated carbon materials of E1a to E1d, E2a to E2d, E3a to E3d, E4a to E4d, E5a to E5d, E6a to E6d, CE1, and CE2 was subjected to measurement of total pore volume using the aforesaid high-performance adsorption analyzer, in which adsorption and desorption analyses with nitrogen as the adsorbate was conducted, so as to obtain a plot illustrating the relationship between adsorption capacity ($V$) and relative pressure ($P/P_0$) of nitrogen at equilibrium pressure, followed by applying the curves in the plot to the HS-2D-NLDFT analytical model so as to calculate total pore volume of each of the activated carbon materials.

7. Determination of distribution of micropores

Each of the activated carbon materials of E1a to E1d, E2a to E2d, E3a to E3d, E4a to E4d, E5a to E5d, E6a to E6d, CE1, and CE2 was subjected to determination of distribution of micropores using the plot obtained in Item 6 above, followed by applying the curves in the plot to the HS-2D-NLDFT analytical model, so as to analyze the distribution of the micropores thereof.

8. Determination of distribution of mesopores

Each of the activated carbon materials of E1a to E1d, E2a to E2d, E3a to E3d, E4a to E4d, E5a to E5d, E6a to E6d, CE1, and CE2 was subjected to determination of distribution of mesopores using the plot obtained in Item 6 above, followed by applying the curves in the plot to the HS-2D-NLDFT analytical model, so as to analyze the distribution of the mesopores thereof.

9. Determination of percentages of micropores and mesopores

Each of the activated carbon materials of E1a to E1d, E2a to E2d, E3a to E3d, E4a to E4d, E5a to E5d, E6a to E6d, CE1, and CE2 was subjected to determination of a percentage of total volume of micropores (abbreviated as "percentage of micropores" hereinafter) based on the total pore volume of the activated carbon material, which was determined in Item 6 above, and to determination of a percentage of total volume of mesopores (abbreviated as "percentage of mesopores" hereinafter) based on the total pore volume of the activated carbon material. The percentages of micropores and mesopores were respectively calculated using the following Equations (III) and (IV):

$$\text{Percentage of micropores} = (V_\mu \div V_{\text{total}}) \times 100\% \qquad \text{(III)}$$

$$\text{Percentage of mesopores} = (V_\gamma \div V_{\text{total}}) \times 100\% \qquad \text{(IV)}$$

in which

$V_\mu$ = total volume of micropores with pore size of not greater than 2 nm
$V_{\text{total}}$ = total pore volume of activated carbon material
$V_\gamma$ = total volume of mesopores with pore size ranging from 2 nm to 50 nm

Referring to FIG. 1, which shows a polarizing microscope image of the soft carbon precursor obtained in E1, the black-colored regions are homogeneous phase structures in the soft carbon precursor, and the greyish regions are mesophase structures therein. The amount of the mesophase structures in the polarizing microscope image of the soft carbon precursor, as determined in accordance with the procedures set forth in ASTM D4616-95 (2013), is 52 vol% (see Table 2 below).

Table 2

| Soft carbon precursor in E1 | |
|---|---|
| Amount of mesophase structure (vol%) | 52 |
| Toluene-insoluble (TI) content (wt%) | 89.9 |
| Quinoline-insoluble (QI) content (wt%) | 96.4 |

As shown in Table 2, the toluene-insoluble content of the soft carbon precursor obtained in E1, as determined in accordance with the procedures set forth in ASTM D4312-95a (2010), is 89.9 wt%, while the quinoline-insoluble content of the soft carbon precursors obtained in E1, as determined in accordance to the procedures set forth in ASTM D7280-06 (2011), is 96.4 wt%.

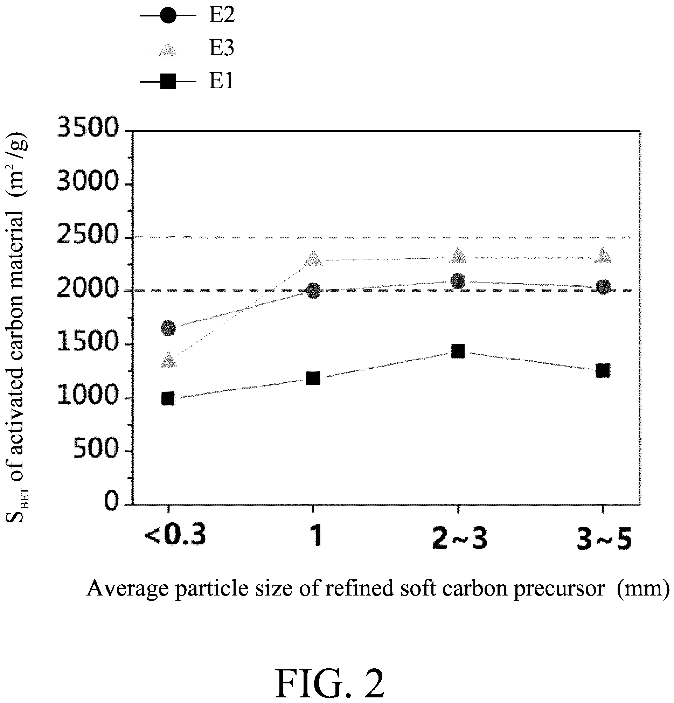

Referring to FIG. 2, the $S_{\text{BET}}$ of the activated carbon material of each of E1, E2, and E3 shows an increasing trend with the increase in the amount of the solid activator (i.e., the solid KOH) and in the average particle size of the refined soft carbon precursor, and the maximum $S_{BET}$ (~2250 m$^2$/g) is achieved when the weight ratio of the refined soft carbon precursor to the solid activator (i.e., solid KOH) is 1:4. The results show that after the activated carbon material prepared by the method according to the present disclosure is made into an electrode, which is then assembled to form a supercapacitor, such activated carbon material can enhance the specific capacitance (unit: F/g) and power density of the supercapacitor.

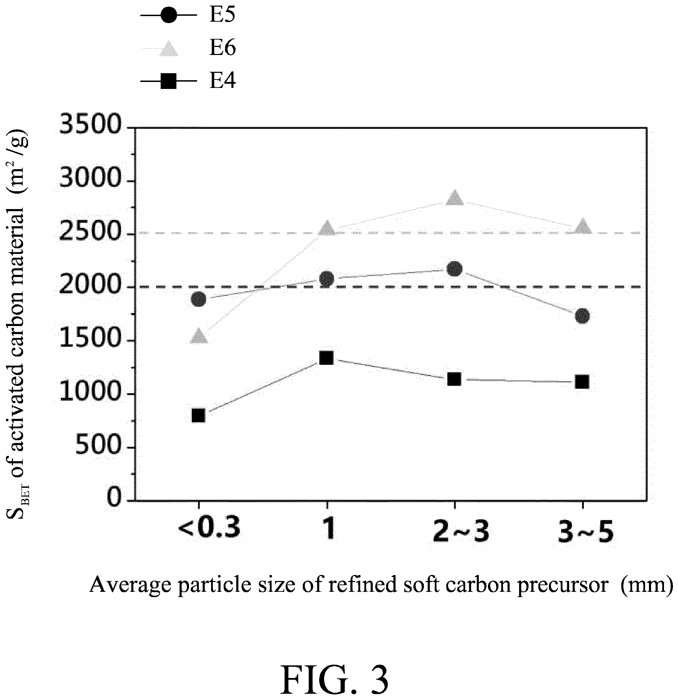

Referring to FIG. 3, the $S_{BET}$ of the activated carbon material of each of E5 and E6 shows an increasing trend with the increase in the amount of the solid activator (i.e., the solid KOH) and in the average particle size of the refined soft carbon precursor. In addition, in each of E5 (where the weight ratio of the refined soft carbon precursor to the solid activator was 1:3) and E6 (where the weight ratio of the refined soft carbon precursor to the solid activator was 1:4), the $S_{BET}$ of the activated carbon material reaches the highest point thereof (i.e., ~2160 m$^2$/g and ~2800 m$^2$/g respectively obtained in E5 and E6) when the average particle size of the refined soft carbon precursor ranges from 2 mm to 3 mm. However, when the average particle size of the refined soft carbon precursor ranges from 3 mm to 5 mm, the $S_{BET}$ of the activated carbon material obtained therefrom decreases to be lower than that of activated carbon material obtained from the refined soft carbon precursor having the particle size ranging from 2 mm to 3 mm. These results show that, when the activated carbon material of E6c prepared by the method according to the present disclosure is made into an electrode, which is then assembled to form a supercapacitor, such activated carbon material can further enhance the specific capacitance and power density of the supercapacitor.

After measurement, the $S_{BET}$ of the activated carbon material of CE1 is ~846 m$^2$/g, and the $S_{BET}$ of the activated carbon material of CE2 is ~2632 m$^2$/g. In the method for manufacturing the activated carbon material of CE2, the $S_{BET}$ of the activated carbon material increased to ~2632 m$^2$/g due to the refined soft carbon precursor having the D50 particle size of 5.11 $\mu$m, the D10 particle size of 2.04 $\mu$m, and the D90 particle size of 9.59 $\mu$m being mixed with the KOH powder having the average particle size of approximately of 5 $\mu$m, and thus the complexity of the manufacturing process in the method is also increased.

Based on the results shown in FIGs. 2 and 3, each of the activated carbon materials of E3c and E6c, and activated carbon materials of Model ASC20 (serving as the activated carbon material of Comparative Example 3 (CE3)) and Model ASC25 (serving as the activated carbon material of Comparative Example (CE4)), both of which were purchased from China Steel Chemical Corporation, was used to prepare an electrode slurry and a plurality of carbon electrode sheets in sequence, followed by assembling the plurality of carbon electrode sheets into a test supercapacitor.

<Starting material for electrode slurry>

Carboxymethyl cellulose powder (abbreviated as "CMC powder" hereinafter) was purchased from JSR Co., Ltd., and product number thereof was JSR-104A.

Conductive carbon black was purchased from Timcal Ltd., and trade name thereof was Super P.

Styrene-butadiene rubber (abbreviated as "SBR" hereinafter) was purchased from Nippon Paper Industries Co., Ltd., and product number thereof was MAC350HC.

Activated carbon materials (abbreviated as "AC" hereinafter) were the aforesaid activated carbon materials of E3c, E6c, CE3, and CE4.

<Preparation of electrode slurry>

First, the CMC powder was added to a deionized water (volume: 12mL), and then homogenization was conducted using a homogenizer at room temperature for 30 minutes to completely dissolve the CMC powder, thereby obtaining a solution having a high viscosity and being completely transparent. Next, the conductive carbon black (i.e., Super P) was added to the solution and homogenization was conducted for 30 minutes, and then the AC was added and homogenization was conducted for 150 minutes until the AC was completely and evenly dispersed, followed by adding the SBR and conducting homogenization for 15 minutes, thereby obtaining the electrode slurry. The weight percentages of the CMC, the SBR, Super P and the AC were shown in Table 3 below, and a total weight of a dry powder (i.e., total weight of the CMC, the SBR, Super P and the AC) in the electrode slurry was 0.2 g.

Table 3

| CMC | SBR | Super P | AC |
|------|-----|---------|-----|
| 1.5% | 5% | 3.5% | 90% |

<Starting materials for carbon electrode sheets>

Aluminum foil was purchased from Japan Capacitor Industrial Co., Ltd., and product number thereof was 30C054.

<Preparation of carbon electrode sheets>

The electrode slurry was introduced into a doctor blade coating machine with a gap size being adjusted to 150 $\mu$m, so as to allow the electrode slurry to be evenly coated on an aluminum foil (serving as a current collector), thereby obtaining an electrode coating on the current collector. Next, the current collector with the electrode coating formed thereon was placed into a vacuum oven, and then heated at a temperature of 110°C for at least 4 hours to ensure that the electrode coating was completely dried (specifically, the deionized water in the electrode coating (i.e., the electrode slurry) was completely evaporated). Thereafter, the current collector with the resultant dried electrode coating was placed into a roller and subjected to rolling at a rolling rate ranging from 30% to 40%, so that a carbon electrode layer having a thickness ranging from 40 $\mu$m to 50 $\mu$m was formed on the current collector, and that the carbon electrode layer and the current collector together formed a carbon electrode. Subsequently, the carbon electrode was cut to obtain the plurality of carbon electrode sheets. It should be noted that, each of the carbon electrode sheets had a working area (dimension of surface area: 1.0 cm $\times$ 1.0 cm) and a welding area protruding outwardly from the working area.

<Starting materials for supercapacitor>

Triethylmethylammonium tetrafluoroborate (abbreviated as "TEMABF$_4$" hereinafter) was purchased from Tokyo Chemical Industry Co., Ltd., and product number thereof was T2198.
Propylene carbonate (abbreviated as "PC" hereinafter) was purchased from Sigma, and product number thereof was 107913.
Aluminum tab leads, each of which had a thickness of 0.1 mm, a width of 3.0 mm and a length of 65.0 mm, were purchased from UBIQ Technology Co., Ltd.
Nickel tab leads, each of which had a thickness of 0.1 mm, a width of 3.0 mm and a length of 65.0 mm, were purchased from UBIQ Technology Co., Ltd.
Separators, each of which serving as a separator membrane of the test supercapacitor, were purchased from Union Chemical Ind. Co., Ltd., and product number thereof was TF40-30.

<Assembly of supercapacitor>

It should be noted that, two of the carbon electrode sheets were grouped together to respectively serve as a positive electrode sheet and a negative electrode sheet of the test supercapacitor. First, residues of the carbon electrode layer remaining on the welding area of each of the positive electrode sheet and the negative electrode sheet were cleaned by wiping, followed by welding, using an ultrasonic spot welding apparatus, one of the aluminum tab leads and one of the nickel tab leads respectively on the welding areas of the positive electrode sheet and the negative electrode sheet, wherein each of the aforesaid aluminum and nickel tab leads was covered with a sealant film on a surface thereof opposite to another surface thereof that faced the welding area. Next, one of the separators, which had an appropriate size, was sandwiched between the working areas of the positive electrode sheet and the negative electrode sheet, and then wrapped around the positive electrode sheet and the negative electrode sheet to completely envelop the same. Thereafter, the separator with the positive electrode sheet and the negative electrode sheet enveloped therein was placed into a plastic bad, and then subjected to vacuum-drying to remove an excessive amount of moisture present in the positive electrode sheet and the negative electrode sheet. Afterwards, the plastic bag containing the positive electrode sheet, the negative electrode sheet and the separator was placed into an argon (Ar)-filled glove box, and then an electrolyte solution (containing TEMABF$_4$ having a concentration of 1 M and PC) was drop-added into the plastic bag, so as to allow the positive electrode sheet, the negative electrode sheet and the separator to be completely soaked in the electrolyte solution. Finally, the plastic bag was sealed using a vacuum-sealing machine from an opening thereof, the aluminum tab lead and the nickel tab lead were ensured to be exposed outside from the plastic bag, and the sealant film on each of the aluminum tab lead and the nickel tab lead was flush with the opening of the plastic bag and sealed in the plastic bag (i.e., located inside the plastic bag), thereby obtaining the test supercapacitor.

<Performance testing of supercapacitors>

1. Specific capacitance (unit: F/g)

A respective one of the test supercapacitors of E3c, E6c, CE3, and CE4 was subjected to measurement of specific capacitance using the Solartron CellTest® System (Model no.: 1470E). First, the positive electrode sheet and the negative electrode sheet of the test supercapacitor were activated by cyclic voltammetry (CV) at a scan rate of 50 mV/sec and a scan voltage ranging from 0 V to 2.7 V. Next, the respective one of the test supercapacitors was subjected to charging at a current density of 2 A/g. Thereafter, at each of current densities of 2 A/g and 100 A/g, the respective one of the test supercapacitors of E3c, E6c, CE3, and CE4 was subjected to a constant current discharge test at a voltage ranging from 0 V to 2.7 V, and at each of current densities of 0.5 A/g, 1.0 A/g, 4.0 A/g, 10 A/g, 12.5 A/g, 20 A/g, 25 A/g, 50 A/g, 75 A/g, and 100 A/g, the respective one of the test supercapacitors of E3c and E6c was subjected to a constant current charge-discharge test once at a voltage ranging from 0 V to 2.7 V. Afterwards, the specific capacitance of the respective one of the test supercapacitors was calculated using the following Equation (V):

$$\text{Specific capacitance} = (4 \times I \times td) / (M \times \Delta V) \qquad (V)$$

in which

I = discharge rate
td = discharge time (seconds)
M = weight of carbon electrode layer in carbon electrode sheets (i.e., the positive electrode sheet and the negative electrode sheet) of each test supercapacitor
$\Delta V$ = potential difference after deduction of internal resistance drop (IR drop)

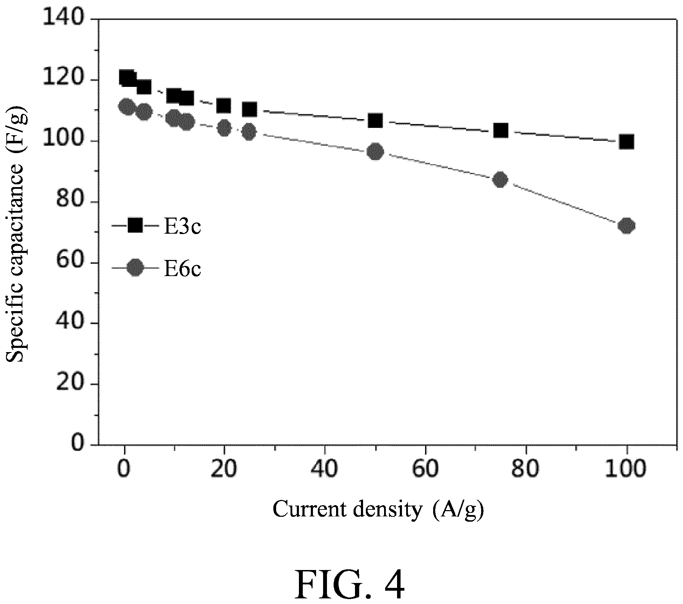

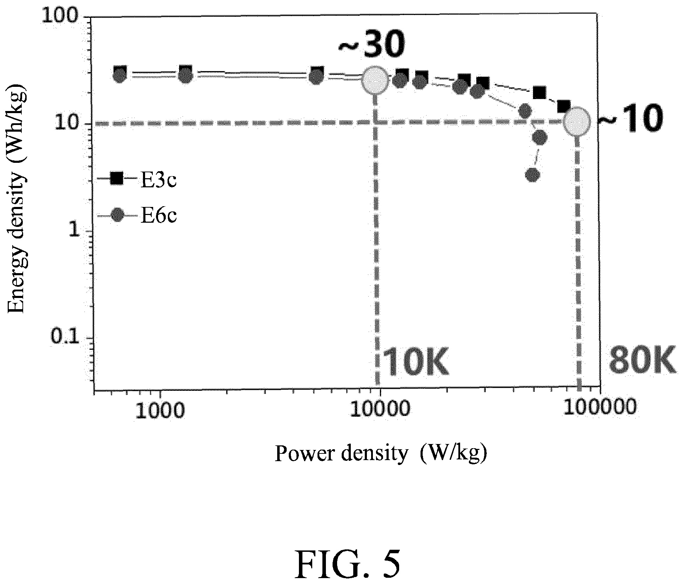

Referring to FIG. 4, at a relatively high current density (i.e., 100 A/g), the specific capacitances of the test supercapacitors of E3c and E6c can reach ~100 F/g and -72 F/g, respectively. Referring to the graph illustrating relationship between energy density and power density (which was derived based on the data shown in FIG. 4) of FIG. 5, the energy density of the test supercapacitor of each of E3c and E6c can reach ~30 Wh/kg at a power density of 10K, and the energy density of the test supercapacitor of E3c can still reach ~10 Wh/kg at a power density of 80K. These results demonstrate that the test supercapacitors of E3c and E6c indeed have excellent specific capacitance, energy density and power density at the power density of 100 A/g.

Referring to Table 4 below, the $S_{BET}$ of the activated carbon material of CE3 is 2000 $m^2$/g, which is close the $S_{BET}$ of the activated carbon material of E3c (i.e., 2338 $m^2$/g), and the $S_{BET}$ of the activated carbon material of CE4 is 2790 $m^2$/g, which is close to the $S_{BET}$ of the activated carbon material of E6c (i.e., 2823 $m^2$/g). The specific capacitances of the test supercapacitors of CE3 and CE4, at the current density of 2 A/g, are merely 109 F/g and 119 F/g, respectively. However, the specific capacitance of the test supercapacitor of E3c (i.e., 121 A/g) is higher than that of CE3 at the same current density (i.e., 2 A/g), and the specific capacitance of the test supercapacitor of E6c (i.e., 111 A/g) is close to that of CE4 at the same current density (i.e., 2 A/g). In addition, the specific capacitance of the test supercapacitor of CE3 is merely ~85 F/g at the current density of 100 A/g. Nevertheless, the specific capacitance of the test supercapacitor E3c (i.e., ~100 F/g) is higher than that of CE3, and the specific capacitance of the test supercapacitor of E6c still is ~72 F/g at the same current density (i.e., 100 A/g). These results show that the test supercapacitor of E3c possess a specific capacitance better than that of the CE3 test supercapacitor at either the current density of 2 A/g or the current density of 100 A/g, and the specific capacitance of the test supercapacitor of E6c (i.e., 111 F/g) can be close to that of CE4 at the current density of 2 A/g, and can reach ~72 F/g at the current density of 100 A/g. Therefore, the method according to the present disclosure is capable of improving the economic value of heavy hydrocarbon oil that is sold at low price.

Table 4

| | $S_{BET}$ ($m^2$/g) | Percentage of micropores (%) | Percentage of mesopores (%) | Specific capacitance (F/g) | |
| --- | --- | --- | --- | --- | --- |
| | | | | 2 A/g | 100 A/g |
| E3c | 2338 | 81 | 19 | 121 | ~100 |
| CE3 | 2000 | 92 | 8 | 109 | ~85 |
| E6c | 2823 | 64 | 36 | 111 | ~72 |
| CE4 | 2790 | 93 | 7 | 119 | - |

In summary, by virtue of the method for making the activated carbon material for the supercapacitor of the present disclosure, the economic value of heavy hydrocarbon oil sold at low price can be improved, and the activated carbon material obtained by the method has high $S_{BET}$, such that a supercapacitor assembled using carbon electrode sheets prepared from the activated carbon material exhibit high energy density, high power density and excellent specific capacitance. Therefore, the purpose of the present disclosure can indeed be achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for making an activated carbon material for a supercapacitor, **characterized by**:

    A) heating a heavy hydrocarbon oil at a pressure ranging from 2 atm to 3 atm and a temperature ranging from 460°C to 500°C for at least 4 hours such that the heavy hydrocarbon oil undergoes a coking reaction to form a soft carbon precursor, the soft carbon precursor having a quinoline-insoluble content ranging from 95 wt% to 98 wt% and a toluene-insoluble content ranging from 89 wt% to 91 wt%, and containing a mesophase structure of greater than 50 vol% based on 100 vol% of the soft carbon precursor;
    B) grinding and sizing the soft carbon precursor so as to obtain a refined soft carbon precursor, the refined soft carbon precursor having an average particle size ranging from 0.3 mm to 5.0 mm;
    C) mixing the refined soft carbon precursor and a solid activator without a solvent being present so as to obtain a mixture, a weight ratio of the refined soft carbon precursor to the solid activator ranging from 0.25 to 0.5 in decimal form;
    D) heating the mixture such that the mixture undergoes an activation reaction and a carbonization reaction to obtain a first carbonaceous component containing an activated carbon and a residual of the solid activator;
    E) treating the first carbonaceous component such that the residual of the solid activator is removed from the first carbonaceous component to obtain a second carbonaceous component;
    F) grinding and sizing the second carbonaceous component so as to obtain a third carbonaceous component; and
    G) heating the third carbonaceous component so as to obtain the activated carbon material for the supercapacitor.

2. The method as claimed in claim 1, wherein in step C), the solid activator has an average particle size ranging from 8 mm to 10 mm.

3. The method as claimed in any one of claims 1 and 2, wherein in step C), the solid activator is not subjected to a grinding and refining treatment.

4. The method as claimed in any one of claims 1 to 3, wherein in step B), the average particle size of the refined soft carbon precursor ranges from 1 mm to 5 mm.

5. The method as claimed in any one of claims 1 to 4, wherein in step D), the mixture is heated to a temperature ranging from 700°C to 900°C at a heating rate ranging from 1°C/min to 10°C/min under a nitrogen atmosphere.

6. The method as claimed in any one of claims 1 to 4, wherein in step D), the mixture is heated to a first temperature ranging from 400°C to 500°C at a heating rate ranging from 1°C/min to 10°C/min under a nitrogen atmosphere and kept at the first temperature for a time period ranging from 4 hours to 6 hours, and then heated to a second temperature ranging from 700°C to 900°C at a heating rate ranging from 1°C/min to 10°C/min under the nitrogen atmosphere and kept at the second temperature for at least 1 hour.

7. The method as claimed in any one of claims 1 to 6, wherein in step C), the solid activator is an alkaline agent.

8. The method as claimed in claim 7, wherein step E) includes the steps of:

E1) introducing a first clear water into the first carbonaceous component so as to obtain an alkaline aqueous solution containing the activated carbon and the residual of the solid activator that is dissolved in the first clear water;

E2) introducing a first acidic aqueous solution containing an acid agent into the alkaline aqueous solution to allow acid-base neutralization between the residual of the solid activator contained in the alkaline aqueous solution and the acid agent contained in the first acidic aqueous solution so as to form a salt, thereby obtaining a second acidic aqueous solution with the salt being dissolved in the second acidic aqueous solution, the second acidic aqueous solution having a pH value greater than a pH value of the first acidic aqueous solution;

E3) introducing a second clear water into the second acidic aqueous solution so as to obtain a final solution having a pH value of 7; and

E4) removing a liquid portion of the final solution so as to obtain a second carbonaceous component.

9. The method as claimed in claim 8, wherein step E1) is conducted for at least 1 hour, and step E2) is conducted for at least 1 hour.

10. The method as claimed in any one of claims 8 and 9, wherein the acid agent contained in the first acidic aqueous solution is selected from the group consisting of sulfuric acid, nitric acid, hydrochloric acid, and combinations thereof.

11. The method as claimed in any one of claims 1 to 10, wherein in step G), the third carbonaceous component is heated to a temperature of less than 1000°C at a heating rate ranging from 1°C/min to 10°C/min under a nitrogen atmosphere.

12. The method as claimed in any one of claims 1 to 11, wherein in step G), the activated carbon material for the supercapacitor has a plurality of micropores and a plurality of mesopores, a diameter of each of the plurality of mesopores being greater than a diameter of each of the plurality of micropores, and a ratio of a total volume of the plurality of micropores to a total volume of the plurality of mesopores ranging from 1.5 to 5.0 in decimal form.

**Amended claims in accordance with Rule 137(2) EPC.**

1. A method for making an activated carbon material for a supercapacitor, **characterized by**:

A) heating a heavy hydrocarbon oil at a pressure ranging from 2 atm to 3 atm and a temperature ranging from 460°C to 500°C for at least 4 hours such that the heavy hydrocarbon oil undergoes a coking reaction to form a soft carbon precursor, the soft carbon precursor having a quinoline-insoluble content ranging from 95 wt% to 98 wt% and a toluene-insoluble content ranging from 89 wt% to 91 wt%, and containing a mesophase structure of greater than 50 vol% based on 100 vol% of the soft carbon precursor;

B) grinding and sizing the soft carbon precursor so as to obtain a refined soft carbon precursor, the refined soft carbon precursor having an average particle size ranging from 1 mm to 5.0 mm;

C) mixing the refined soft carbon precursor and a solid activator without a solvent being present so as to obtain a mixture, a weight ratio of the refined soft carbon precursor to the solid activator ranging from 0.25 to 0.5 in decimal form;

D) heating the mixture such that the mixture undergoes an activation reaction and a carbonization reaction to obtain a first carbonaceous component containing an activated carbon and a residual of the solid activator;

E1) introducing a first clear water into the first carbonaceous component so as to obtain an alkaline aqueous solution containing the activated carbon and the residual of the solid activator that is dissolved in the first clear water;

E2) introducing a first acidic aqueous solution containing an acid agent into the alkaline aqueous solution to allow acid-base neutralization between the residual of the solid activator contained in the alkaline aqueous solution and the acid agent contained in the first acidic aqueous solution so as to form a salt, thereby obtaining a second acidic aqueous solution with the salt being dissolved in the second acidic aqueous solution, the second acidic aqueous solution having a pH value greater than a pH value of the first acidic aqueous solution;

E3) introducing a second clear water into the second acidic aqueous solution so as to obtain a final solution having a pH value of 7;

E4) removing a liquid portion of the final solution so as to obtain a second carbonaceous component;

F) grinding and sizing the second carbonaceous component so as to obtain a third carbonaceous component; and

G)heating the third carbonaceous component so as to obtain the activated carbon material for the supercapacitor, wherein in step C), the solid activator has an average particle size ranging from 8 mm to 10 mm, is not subjected to a grinding and refining treatment, and is an alkaline agent.

2. The method as claimed in claim 1, wherein in step D), the mixture is heated to a temperature ranging from 700°C to 900°C at a heating rate ranging from 1°C/min to 10°C/min under a nitrogen atmosphere.

3. The method as claimed in any one of claims 1 to 2, wherein in step D), the mixture is heated to a first temperature ranging from 400°C to 500°C at a heating rate ranging from 1°C/min to 10°C/min under a nitrogen atmosphere and kept at the first temperature for a time period ranging from 4 hours to 6 hours, and then heated to a second temperature ranging from 700°C to 900°C at a heating rate ranging from 1°C/min to 10°C/min under the nitrogen atmosphere and kept at the second temperature for at least 1 hour.

4. The method as claimed in any one of claims 1 to 3, wherein step E1) is conducted for at least 1 hour, and step E2) is conducted for at least 1 hour.

5. The method as claimed in any one of claims 1 to 4, wherein the acid agent contained in the first acidic aqueous solution is selected from the group consisting of sulfuric acid, nitric acid, hydrochloric acid, and combinations thereof.

6. The method as claimed in any one of claims 1 to 5, wherein in step G), the third carbonaceous component is heated to a temperature of less than 1000°C at a heating rate ranging from 1°C/min to 10°C/min under a nitrogen atmosphere.

7. The method as claimed in any one of claims 1 to 6, wherein in step G), the activated carbon material for the supercapacitor has a plurality of micropores and a plurality of mesopores, a diameter of each of the plurality of mesopores being greater than a diameter of each of the plurality of micropores, and a ratio of a total volume of the plurality of micropores to a total volume of the plurality of mesopores ranging from 1.5 to 5.0 in decimal form.

FIG. 1

FIG. 2

FIG. 3

FIG. 4

FIG. 5

# EUROPEAN SEARCH REPORT

**Application Number**

EP 25 16 0625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TW I 656 094 B (CPC CORP TAIWAN [TW]) 11 April 2019 (2019-04-11) * example all * | 1-12 | INV. C01B32/33 C01B32/342 H01G11/34 |
| A | US 10 008 337 B2 (POWER CARBON TECH CO LTD [KR]) 26 June 2018 (2018-06-26) * example all * | 1-12 | |
| A | CN 103 204 501 A (TOWNGAS ENVIRONMENTAL PROT ENERGY RES INST CO LTD; UNIV DALIAN TECH) 17 July 2013 (2013-07-17) * example all * | 1-12 | |
| A | CN 117 342 554 A (SHANXI XINHUA CHEMICAL DEFENSE EQUIPMENT RES INSTITUTE CO LTD) 5 January 2024 (2024-01-05) * example all * | 1-12 | |
| A | WANG M X ET AL: "Preparation of high-performance activated carbons for electric double layer capacitors by KOH activation of mesophase pitches", NEW CARBON MATERIALS, ELSEVIER, AMSTERDAM, NL, vol. 25, no. 4, 1 June 2010 (2010-06-01), pages 285-290, XP027254855, ISSN: 1872-5805 [retrieved on 2010-06-01] * Experimental * | 1-12 | **TECHNICAL FIELDS SEARCHED (IPC)** C01B H01G |
| A | EP 1 195 355 A1 (KAWASAKI STEEL CO [JP]) 10 April 2002 (2002-04-10) * example all * | 1-12 | |

The present search report has been drawn up for all claims

| Place of search | Date of completion of the search | Examiner |
|---|---|---|
| The Hague | 20 August 2025 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 16 0625

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2025

| Patent document cited in search report | | Publication date | Patent family member(s) | | Publication date |
|---|---|---|---|---|---|
| TW I656094 | B | 11-04-2019 | NONE | | |
| US 10008337 | B2 | 26-06-2018 | CN | 105122407 A | 02-12-2015 |
| | | | JP | 6380993 B2 | 29-08-2018 |
| | | | JP WO2014136936 A1 | | 16-02-2017 |
| | | | KR | 20150126636 A | 12-11-2015 |
| | | | US | 2016012980 A1 | 14-01-2016 |
| | | | WO | 2014136936 A1 | 12-09-2014 |
| CN 103204501 | A | 17-07-2013 | NONE | | |
| CN 117342554 | A | 05-01-2024 | NONE | | |
| EP 1195355 | A1 | 10-04-2002 | EP | 1195355 A1 | 10-04-2002 |
| | | | JP | 2001287906 A | 16-10-2001 |
| | | | KR | 20020002412 A | 09-01-2002 |
| | | | TW | 526171 B | 01-04-2003 |
| | | | US | 2003086860 A1 | 08-05-2003 |
| | | | WO | 0156924 A1 | 09-08-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• TW I822169 B